# EUROPÄISCHE PATENTSCHRIFT

(11) **EP 3 868 957 B1**
(45) Veröffentlichungstag und Bekanntmachung des Hinweises auf die Patenterteilung: **02.08.2023**
(21) Anmeldenummer: 20158499.2
(22) Anmeldetag: 20.02.2020
(51) Int. Cl.: E01C 19/48, B60Q 1/00, B60Q 1/24

(54) **STRASSENFERTIGER MIT INDIREKTER BELEUCHTUNG EINES ARBEITSBEREICHS**
ROAD FINISHER WITH INDIRECT LIGHTING OF A WORKING AREA
FINISSEUR À ÉCLAIRAGE INDIRECT D'UNE ZONE DE TRAVAIL

(43) Veröffentlichungstag der Anmeldung: 25.08.2021
(73) Patentinhaber: Joseph Vögele AG, 67067 Ludwigshafen (DE)
(72) Erfinder: EUL, Achim, 68305 Mannheim (DE); HEINDTEL, Michael, 68199 Mannheim (DE)
(74) Vertreter: Grünecker Patent- und Rechtsanwälte PartG mbB

(56) Entgegenhaltungen:
- EP-A1- 3 115 238
- EP-A1- 3 214 223
- EP-A1- 3 587 667
- EP-A2- 2 650 196

## Beschreibung

Die Erfindung betrifft die Beleuchtung eines Straßenfertigers. Insbesondere betrifft die Erfindung die Beleuchtung eines Arbeitsbereichs einer Einbaubohle eines Straßenfertigers
Es ist bekannt, eine Umgebung eines Straßenfertigers zu beleuchten, um ein Arbeiten bei schlechten Lichtverhältnissen zu vereinfachen. Auf Nachtbaustellen werden zur Beleuchtung oftmals Lichtballone eingesetzt. Diese sind aufwändig aufzubauen und kostenintensiv.

Aus der EP 2 650 196 A2 ist ein Fahrerdach für einen Bedienstand eines Straßenfertigers mit einem ersten Dachmodul und einem zweiten Dachmodul bekannt. An einem Dachmodul kann wenigstens ein Leuchtmittel vorgesehen sein, mittels dessen der Fahrerstand und/oder der Arbeitsbereich des Straßenfertigers ausgeleuchtet werden können.

Aus der EP 3 115 238 A1 ist ein Straßenfertiger mit an einem Dach angeordneten Beleuchtungseinrichtungen bekannt.

Aus der EP 3 587 667 A1 ist ein Straßenfertiger mit einem optischen Projektor bekannt, der dazu konfiguriert ist, auf dem Untergrund in Einbaurichtung gesehen seitlich und/oder vor das Chassis des Straßenfertigers mindestens eine Projizierung im sichtbaren Spektrum zu erzeugen, wobei die Projizierung vom Bedienstand aus in Einbaurichtung gesehen als Navigationshilfe von einem Fahrer des Straßenfertigers einsehbar ist.

Aus der EP 3 214 223 A1 ist ein Straßenfertiger mit einer Arbeitsbeleuchtung zum Beleuchten einer Umgebung des Straßenfertigers bekannt. Die Arbeitsbeleuchtung kann ein von dem Straßenfertiger mit einer Fahrbahndecke zu versehendes Planum beleuchten. Die Arbeitsbeleuchtung umfasst hinten an einem Dach eines Führerstands des Straßenfertigers vorgesehene Rückscheinwerfer.

Es besteht ein Bedarf für einen Straßenfertiger mit einer verbesserten Beleuchtung für einen Arbeitsbereich. Es besteht ein Bedarf für eine Beleuchtung, die eine qualitativ gute Ausleuchtung eines Arbeitsbereichs eines Straßenfertigers ermöglicht. Es besteht ein Bedarf für eine Beleuchtung eines Straßenfertigers, welche sich gut in eine Baustellensituation beim Straßenbau integrieren lässt.

Erfindungsgemäß wird ein Straßenfertiger mit einem Zugfahrzeug und mit einer Einbaubohle bereitgestellt. Die Einbaubohle ist an dem Zugfahrzeug angelenkt, um hinter dem Zugfahrzeug hergezogen zu werden. An dem Zugfahrzeug ist ein Hauptbedienstand des Straßenfertigers vorgesehen. Der Hauptbedienstand bietet Platz für eine Bedienperson und umfasst Bedienelemente zum Steuern von Funktionen des Straßenfertigers. Der Hauptbedienstand weist ein Dach auf. An dem Dach des Hauptbedienstands ist eine Beleuchtungseinheit mit einer Lichtquelle vorgesehen. Die Beleuchtungseinheit umfasst ein Gehäuse, welches die Lichtquelle aufnimmt. Das Gehäuse umfasst einen Reflektor. Der Reflektor ist dazu konfiguriert, von der Lichtquelle ausgesandtes Licht in einen Arbeitsbereich der Einbaubohle zu reflektieren, so dass der Arbeitsbereich der Einbaubohle indirekt beleuchtet wird.

Da die Beleuchtungseinheit an dem Dach des Hauptbedienstands vorgesehen ist, ist die Beleuchtungseinheit erhöht positioniert und in der Lage, den Arbeitsbereich der Einbaubohle von oben auszuleuchten. An dem Dach ist die Beleuchtungseinheit relativ weit vom Boden entfernt und damit wenig anfällig für Verschmutzung. Zudem wird die Lichtquelle durch das Gehäuse vor Verschmutzung oder Beschädigung geschützt. Durch das Beleuchten des Arbeitsbereichs der Einbaubohle lässt sich der Einbauvorgang leichter überwachen und steuern. Da der Arbeitsbereich der Einbaubohle mittels des Reflektors indirekt beleuchtet wird, kann eine Blendwirkung für Arbeiter und vorbeifahrende Verkehrsteilnehmer verringert werden. Mittels des Reflektors lässt sich eine vergleichsweise homogene Ausleuchtung des Arbeitsbereichs der Einbaubohle erreichen. Gegenüber einer direkten Ausleuchtung kann eine Schattenbildung verringert werden.

Der Arbeitsbereich der Einbaubohle kann einen Bereich umfassen, in dem sich die Einbaubohle oder ein Teil der Einbaubohle befindet. Zusätzlich oder alternativ kann der Arbeitsbereich der Einbaubohle einen oder mehrere Bereiche umfassen, die sich bezüglich der Einbaufahrtrichtung des Straßenfertigers nach vorne oder nach hinten an die Einbaubohle anschließen oder sich vor oder hinter der Einbaubohle befinden. Der Arbeitsbereich der Einbaubohle kann alternativ oder zusätzlich auch Bereiche umfassen, die sich seitlich an die Einbaubohle anschließen oder sich seitlich neben der Einbaubohle befinden. Es ist nicht zwingend erforderlich, dass der gesamte Arbeitsbereich der Einbaubohle beleuchtet wird.

Der Reflektor kann eine Reflexionsfläche umfassen, welche für das von der Lichtquelle ausgesandte Licht einen Reflexionsgrad von zumindest 0,5 oder zumindest 0,6 oder zumindest 0,7 oder zumindest 0,8 oder zumindest 0,9 aufweist. Der Reflexionsgrad gibt dabei das Verhältnis der von der Reflexionsfläche reflektierten Lichtleistung zu der der auf die Reflexionsfläche auftreffenden Lichtleistung an. Die Reflexionsfläche kann durch eine Metalloberfläche, insbesondere eine polierte Metalloberfläche, gebildet sein. Die Reflexionsfläche kann durch eine Spiegeloberfläche gebildet sein. Ein hoher Reflexionsgrad kann die Beleuchtungseffizienz verbessern.

Der Reflektor kann dazu konfiguriert sein, zumindest 50 % oder zumindest 60 % oder zumindest 70 % oder zumindest 80 % oder zumindest 90 % oder zumindest 95 % der von der Lichtquelle emittierten Lichtleistung zu reflektieren. Dies impliziert, dass ein ausreichend großer Anteil der von der Lichtquelle emittierten Lichtleistung auf den Reflektor trifft und der Reflektor zudem einen ausreichend großen Reflexionsgrad aufweist. Wenn ein hoher Anteil der von der Lichtquelle emittierten Lichtleistung von dem Reflektor reflektiert wird, geht ein hoher Anteil der Lichtleistung in das indirekte Beleuchten des Arbeitsbereichs der Einbaubohle ein.

Der Reflektor kann eine gekrümmte Reflexionsfläche zum Reflektieren des von der Lichtquelle ausgesandten Lichts in den Arbeitsbereich der Einbaubohle umfassen. Durch eine gekrümmte Reflexionsfläche lässt sich das reflektierte Licht besonders effizient in den Arbeitsbereich der Einbaubohle umleiten. Durch ein geeignetes Auswählen einer Krümmung der Reflexionsfläche lässt sich die Größe und Lage des beleuchteten Bereichs festlegen.

Der Reflektor kann zumindest bereichsweise oberhalb der Lichtquelle vorgesehen sein. Von oberhalb der Lichtquelle kann der Reflektor das von der Lichtquelle ausgesandte Licht nach unten reflektieren, um den Arbeitsbereich der Einbaubohle indirekt zu beleuchten. Der Reflektor kann vollständig oberhalb der Lichtquelle vorgesehen sein.

Vorzugsweise ist eine Hauptabstrahlrichtung der Lichtquelle gegenüber einer horizontalen Richtung nach oben geneigt. Die Hauptabstrahlrichtung der Lichtquelle kann eine Richtung sein, in welcher die Lichtquelle die höchste Lichtleistung abstrahlt. Wenn die Hauptabstrahlrichtung der Lichtquelle gegenüber einer horizontalen Richtung nach oben geneigt ist, kann eine Blendwirkung für Arbeiter und vorbeifahrende Verkehrsteilnehmer deutlich reduziert werden.

Die Lichtquelle kann entlang einer horizontalen Blickrichtung durch das Gehäuse verdeckt sein. Hierdurch kann eine Blendwirkung der Lichtquelle auf Arbeiter oder vorbeifahrende Verkehrsteilnehmer reduziert werden. Insbesondere kann der Reflektor die Lichtquelle entlang einer horizontalen Blickrichtung verdecken. Es wäre aber auch denkbar, dass ein Teil des Gehäuses, der nicht Teil des Reflektors ist, die Lichtquelle entlang einer horizontalen Blickrichtung verdeckt.

Der Reflektor kann von oben bis zumindest auf das Level einer Unterkante der Lichtquelle heruntergeführt sein. Hierdurch kann der Reflektor über einen großen Winkelbereich von der Lichtquelle abgestrahltes Licht reflektieren. Zudem schirmt der Reflektor von der Lichtquelle abgestrahltes direktes Licht über einen großen Winkelbereich ab, um eine Blendwirkung der Lichtquelle auf Arbeiter oder vorbeifahrende Verkehrsteilnehmer zu verringern. Gemäß einer Ausführungsform ist der Reflektor von oben bis unter die Lichtquelle herunter geführt.

Die Lichtquelle kann eine Mehrzahl von LEDs umfassen. Wenn LEDs als Lichtquelle verwendet werden, lässt sich der elektrische Leistungsbedarf der Lichtquelle gering halten. Zudem wird aufgrund der Langlebigkeit von LEDs der Wartungsaufwand verringert.

Gemäß einer Ausführungsform sind die LEDs der Lichtquelle separat voneinander schaltbar. Die LEDs der Lichtquelle können insbesondere einzeln oder gruppenweise separat voneinander schaltbar sein. Durch separat voneinander schaltbare LEDs lässt sich beispielsweise die Größe und/oder die Form des beleuchteten Bereichs anpassen. Beispielsweise kann die Größe und/oder die Form des beleuchteten Bereichs entsprechend einer Konfiguration der Einbaubohle angepasst werden. Beispielsweise kann der beleuchtete Bereich durch Zuschalten oder Abschalten von LEDs an eine Einbaubreite angepasst werden. Die Einbaubreite kann durch einen Bediener vorgegeben oder von dem Straßenfertiger automatisch erkannt werden. Alternativ wäre auch denkbar, dass sämtliche LEDs der Lichtquelle zusammen schaltbar sind.

Die Lichtquelle kann dimmbar ausgestaltet sein, um verschiedene Beleuchtungsintensitäten realisieren zu können. Durch ein Anpassen der Beleuchtungsintensität kann eine Blendwirkung verringert werden.

Der Reflektor kann dazu konfiguriert sein, das von der Lichtquelle ausgesandte Licht unter einem Winkel von wenigstens 30° oder wenigstens 35° oder wenigstens 40° oder wenigstens 45° oder wenigstens 60° gegenüber einer horizontalen Ebene in den Arbeitsbereich der Einbaubohle zu reflektieren. Durch einen steilen Winkel gegenüber der horizontalen Ebene kann eine Schattenbildung reduziert werden.

Der Reflektor kann dazu konfiguriert sein, von der Lichtquelle ausgesandtes Licht in einen Bodenbereich zu strahlen, welcher sich bezüglich der Einbaufahrtrichtung des Straßenfertigers bis maximal 5 m oder maximal 6 m oder maximal 8 m oder maximal 10 m oder maximal 15 m hinter der Beleuchtungseinheit erstreckt. Durch die Begrenzung des ausgeleuchteten Bereichs nach hinten ist es nicht erforderlich, Licht in einem flachen Winkel gegenüber der Horizontalen zu reflektieren, so dass die Gefahr des Blendens von Arbeitern oder vorbeifahrenden Verkehrsteilnehmern reduziert wird.

Die Beleuchtungseinheit kann eine Streueinrichtung umfassen, welche in einem Strahlengang des von der Lichtquelle ausgesandten Lichts angeordnet ist. Durch die Streueinrichtung kann eine relativ homogene Ausleuchtung erreichbar sein. Die Streueinrichtung kann in das Gehäuse der Beleuchtungseinrichtung integriert sein. Die Streueinrichtung kann das Gehäuse der Beleuchtungseinheit abschließen.

Die Streueinrichtung kann beispielsweise ein Prisma oder eine Streuscheibe umfassen.

Die Beleuchtungseinheit kann dazu konfiguriert sein, wahlweise eine Arbeitsbeleuchtung zum Beleuchten des Arbeitsbereichs der Einbaubohle bereitzustellen oder eine Notbeleuchtung mit gegenüber der Arbeitsbeleuchtung reduzierter Lichtleistung bereitzustellen. Die Arbeitsbeleuchtung kann während eines Einbauvorgangs zum Überwachen des Arbeitsbereichs der Einbaubohle verwendet werden. Die Notbeleuchtung mit reduzierter Lichtleistung kann beispielsweise vor oder nach dem Einbauvorgang verwendet werden, um ein Aufsteigen auf den Hauptbedienstand oder ein Absteigen von dem Hauptbedienstand bei Dunkelheit zu erleichtern.

Gemäß einer Ausführungsform wird die Notbeleuchtung von derselben Lichtquelle bereitgestellt wie die Arbeitsbeleuchtung. Hierzu könnte die Lichtquelle beispielsweise dimmbar sein oder es könnte möglich sein, nur einen Teil der Lichtquelle zu aktivieren. Gemäß einer anderen Ausführungsform ist zum Bereitstellen der Notbeleuchtung eine weitere Lichtquelle in die Beleuchtungseinheit integriert.

Vorzugsweise ist die Beleuchtungseinheit als ein Modul an dem Dach des Hauptbedienstands angebracht. Hierdurch werden Montage und Demontage der Beleuchtungseinheit erleichtert. Zudem ist bei der Montage der Beleuchtungseinheit keine aufwändige Einstellarbeit der Beleuchtungseinheit mehr erforderlich, wenn diese als Modul insgesamt voreingestellt oder ausgerichtet wurde. Das Modul kann als eine Einheit von dem Straßenfertiger abmontierbar sein.

Im Folgenden wird die Erfindung anhand von Ausführungsbeispielen unter Bezugnahme auf die Figuren weiter erläutert. Dabei zeigen:
- Figur 1: eine schematische Perspektivansicht eines Straßenfertigers gemäß einer Ausführungsform;
- Figur 2: eine schematische Draufsicht auf den Straßenfertiger gemäß der Ausführungsform;
- Figur 3: eine schematische Perspektivansicht einer Beleuchtungseinheit des Straßenfertigers gemäß der Ausführungsform; und
- Figur 4: eine schematische Schnittdarstellung der Beleuchtungseinheit gemäß der Ausführungsform in Seitenansicht.

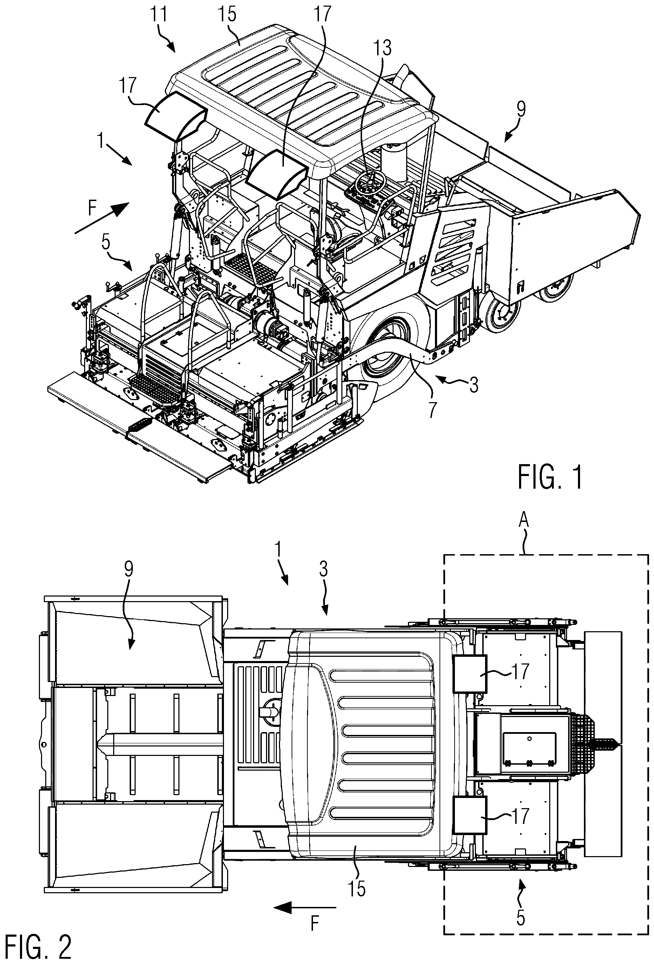

Fig. 1 zeigt in schematischer Perspektivansicht einen Straßenfertiger 1 gemäß einer Ausführungsform. Der Straßenfertiger 1 umfasst ein Zugfahrzeug 3 und eine Einbaubohle 5. Die Einbaubohle 5 ist über Zugholme 7 an dem Zugfahrzeug 3 angelenkt und wird in Einbaufahrtrichtung F hinter dem Zugfahrzeug 3 hergezogen. In Einbaufahrtrichtung F vorne am Zugfahrzeug 3 ist ein Gutbunker 9 zur Aufnahme von Einbaugut vorgesehen. Im Betrieb wird Einbaugut von dem Gutbunker 9 über nicht dargestellte Fördereinrichtungen in einen hinteren Bereich des Straßenfertigers 1 transportiert und der Einbaubohle 5 zum Verdichten vorgelegt.

An dem Zugfahrzeug 3 ist ein Hauptbedienstand 11 des Straßenfertigers 1 vorgesehen. Der Hauptbedienstand 11 bietet Platz für eine Bedienperson und umfasst Bedienelemente 13 zum Steuern von Funktionen des Straßenfertigers 1. Beispielsweise lassen sich über die Bedienelemente 13 die Fahrfunktionen des Straßenfertigers 1 steuern und Einbauparameter einstellen. Der Hauptbedienstand 11 weist ein Dach 15 auf, welches die Bedienperson vor Sonne und Witterung schützt. Hinten an dem Dach 15 sind zwei Beleuchtungseinheiten 17 vorgesehen. Es wäre aber auch denkbar, lediglich eine Beleuchtungseinheit 17 oder mehr als zwei Beleuchtungseinheiten 17 vorzusehen.

In der gezeigten Ausführungsform sind die beiden Beleuchtungseinheiten 17 zueinander identisch ausgebildet. Die Beleuchtungseinheiten 17 sind dazu konfiguriert, einen Arbeitsbereich A der Einbaubohle 5 zu beleuchten. Ein Beispiel für einen Arbeitsbereich A der Einbaubohle 5 ist in Fig. 2 dargestellt. Der Arbeitsbereich A ist ein Bereich, in welchem die Einbaubohle 5 vorliegt und/oder welcher sich vor und/oder hinter und/oder seitlich der Einbaubohle 5 erstreckt. Durch die Beleuchtung des Arbeitsbereichs A der Einbaubohle 5 kann der Arbeitsbereich A der Einbaubohle 5 auch bei Dunkelheit von dem Fertigerfahrer oder einem anderen Arbeiter überwacht werden, um sicherzustellen, dass der Einbauvorgang ordnungsgemäß erfolgt.

In der dargestellten Ausführungsform ist der Arbeitsbereich Ader Einbaubohle 5 als ein Rechteck um die Einbaubohle 5 herum dargestellt. Es versteht sich, dass der Arbeitsbereich A der Einbaubohle 5 nicht auf diese Geometrie oder Positionierung beschränkt ist. Es wäre beispielsweise denkbar, dass sich der beleuchtete Bereich nur nach hinten, nicht aber nach vorne, über die Einbaubohle 5 hinaus erstreckt.

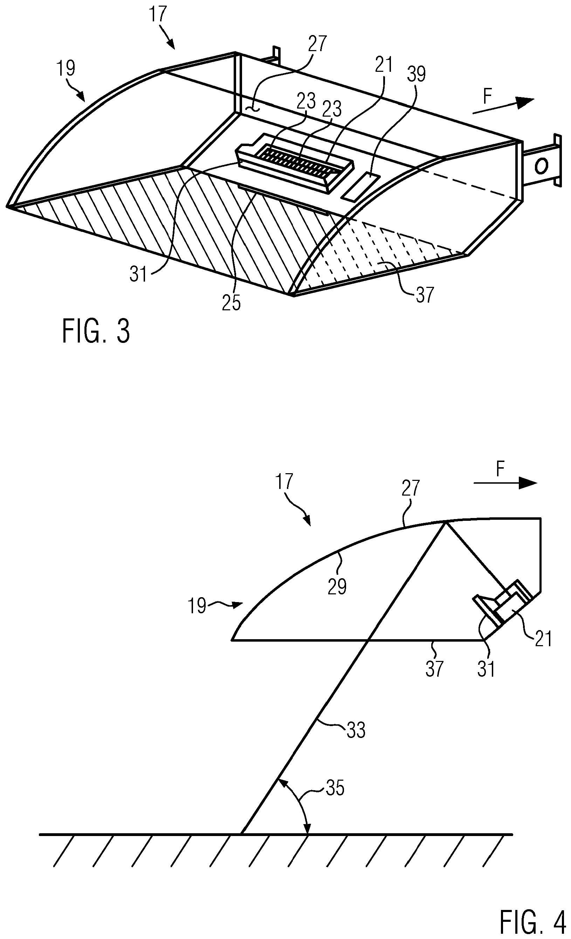

Fig. 3 zeigt eine der beiden Beleuchtungseinheiten 17 in schematischer Perspektivansicht. Die Beleuchtungseinheit 17 umfasst ein Gehäuse 19, welches in Fig. 3 aus Gründen der Übersichtlichkeit durchsichtig dargestellt ist. Das Gehäuse 19 nimmt eine Lichtquelle 21 auf. In der dargestellten Ausführungsform umfasst die Lichtquelle 21 eine Mehrzahl von LEDs 23. Die Beleuchtungseinheit 17 umfasst eine Schnittstelle 25 zum Verbinden mit einer Stromversorgung des Straßenfertigers 1 und zum Verbinden mit einer Steuerung des Straßenfertigers 1.

Die Lichtquelle 21 ist gegenüber einer horizontalen Richtung nach oben geneigt. Die Lichtquelle 21 ist derart angeordnet, dass eine Hauptabstrahlrichtung der Lichtquelle 21 gegenüber einer horizontalen Richtung nach oben geneigt ist. Die Beleuchtungseinheit 17 umfasst einen Reflektor 27, welcher von der Lichtquelle 21 ausgesandtes Licht in den Arbeitsbereich A der Einbaubohle 5 reflektiert, so dass der Arbeitsbereich A der Einbaubohle 5 indirekt beleuchtet wird. In der dargestellten Ausführungsform bildet der Reflektor 27 einen Teil des Gehäuses 19. Es wäre aber auch denkbar, dass der Reflektor 27 als separates Element innerhalb des Gehäuses 19 angebracht ist. Der Reflektor 27 umfasst in der gezeigten Ausführungsform eine gekrümmte Reflexionsfläche 29 zum Reflektieren des von der Lichtquelle 21 ausgesandten Lichts (siehe Fig. 4). Der Reflektor 27 ist bereichsweise oberhalb der Lichtquelle 21 vorgesehen und erstreckt sich nach hinten entgegen der Einbaufahrtrichtung F von oben nach unten bis unter die Lichtquelle 21. Wie leicht anhand der Fig. 3 und 4 ersichtlich, ist durch die Geometrie des Gehäuses 19 bzw. des Reflektors 27 die Lichtquelle 21 entlang einer horizontalen Blickrichtung verdeckt. Das Gehäuse 19 und/oder der Reflektor 27 verhindert, dass ein hinter oder neben dem Straßenfertiger 1 stehender Arbeiter oder ein vorbeifahrender Verkehrsteilnehmer direkt in die Lichtquelle 21 blicken kann und so geblendet wird. In der dargestellten Ausführungsform ist zudem innerhalb des Gehäuses 19 um die Lichtquelle 21 herum eine Abschirmeinrichtung 31 vorgesehen, um weiteren Schutz gegen ein Blenden eines Arbeiters oder eines vorbeifahrenden Verkehrsteilnehmers zu bieten.

Fig. 4 zeigt schematisch den Strahlengang eines von der Lichtquelle 21 ausgesandten Lichtstrahls 33. Der Lichtstrahl 33 wird zunächst von der Lichtquelle 21 schräg nach hinten oben ausgesandt. Der Lichtstrahl 33 trifft auf die Reflexionsfläche 29 des Reflektors 27 und wird von dort reflektiert, um unter einem Winkel 35 gegenüber einer horizontalen Ebene in den Arbeitsbereich Ader Einbaubohle 5 reflektiert zu werden. Der Winkel 35 soll hier als der kleinere der beiden Winkel definiert sein, welche der Lichtstrahl 33 mit der horizontalen Ebene bildet. Der Winkel 35 ist vorzugsweise wenigstens 30° oder wenigstens 35° oder wenigstens 40° oder wenigstens 45° oder wenigstens 60°.

Die Beleuchtungseinheit 17 umfasst des Weiteren eine Streueinrichtung 37, die in dem Strahlengang des von der Lichtquelle 21 ausgesandten Lichts angeordnet ist. Die Streueinrichtung 37 kann beispielsweise eine Streuscheibe umfassen. Alternativ oder zusätzlich könnte die Streueinrichtung 37 ein Prisma umfassen. In der gezeigten Ausführungsform ist die Streueinrichtung 37 als plattenförmiges Element ausgebildet, welches das Gehäuse 19 abschließt. Es wäre aber auch denkbar, dass die Streueinrichtung 37 innerhalb oder außerhalb des Gehäuses 19 vorgesehen ist. Durch die Streueinrichtung 37 wird eine homogene Lichtverteilung sichergestellt. Zudem kann eine Blendwirkung weiter verringert werden.

Wie aus den Figuren ersichtlich, ist die Beleuchtungseinheit 17 als ein Modul vorgesehen, welches an dem Dach 15 des Hauptbedienstands 11 des Straßenfertigers 1 angebracht ist. Das Modul kann zunächst komplett zusammengebaut werden und dann als Ganzes an dem Dach 15 befestigt werden. Die Beleuchtungseinheit 17 kann als Ganzes von dem Dach 15 demontierbar sein.

Die LEDs 23 der Lichtquelle 21 sind gemäß einer einfachen Ausführungsform alle zusammen ein- und ausschaltbar. Alternativ wäre es denkbar, die LEDs 23 einzeln oder gruppenweise separat voneinander zu schalten. So könnte beispielsweise eine Größe des beleuchteten Bereichs an eine Konfiguration oder Breite der Einbaubohle 5 angepasst werden. Optional kann die Lichtquelle 21 dimmbar ausgestaltet sein, um verschiedene Beleuchtungsintensitäten realisieren zu können.

Gemäß einer Ausführungsform kann die Beleuchtungseinheit 17 in zwei unterschiedlichen Betriebsmodi arbeiten. In einem Betriebsmodus zum Bereitstellen einer Arbeitsbeleuchtung kann die Beleuchtungseinheit 17, wie beschrieben, zum Beleuchten des Arbeitsbereichs Ader Einbaubohle 5 betrieben werden. In einem Betriebsmodus zum Bereitstellen einer Notbeleuchtung kann die Beleuchtungseinheit 17 eine gegenüber der Arbeitsbeleuchtung verringerte Lichtleistung bereitstellen, welche beispielsweise verwendet werden kann, um einem Bediener das Aufsteigen in den Hauptbedienstand 11 oder das Absteigen von dem Hauptbedienstand 11 bei Dunkelheit zu erleichtern. Die Notbeleuchtung kann unter Verwendung von LEDs 23 bereitgestellt werden, die ebenfalls zum Bereitstellen der Arbeitsbeleuchtung beitragen. Alternativ wäre es denkbar für die Notbeleuchtung eine separate Lichtquelle 39 (siehe Fig. 3) vorzusehen. Die separate Lichtquelle 39 ist vorzugsweise ebenfalls Teil der Beleuchtungseinheit 17 und kann insbesondere an oder in dem Gehäuse 19 vorgesehen sein.

## Patentansprüche

1. Straßenfertiger (1) mit einem Zugfahrzeug (3) und mit einer Einbaubohle (5), welche an dem Zugfahrzeug (3) angelenkt ist, um hinter dem Zugfahrzeug (3) hergezogen zu werden, wobei
an dem Zugfahrzeug (3) ein Hauptbedienstand (11) des Straßenfertigers (1) vorgesehen ist, welcher Platz für eine Bedienperson bietet und Bedienelemente (13) zum Steuern von Funktionen des Straßenfertigers (1) aufweist; und
der Hauptbedienstand (11) ein Dach (15) aufweist, wobei an dem Dach (15) eine Beleuchtungseinheit (17) mit einer Lichtquelle (21) vorgesehen ist,
**dadurch gekennzeichnet, dass**
die Beleuchtungseinheit (17) ein Gehäuse (19) umfasst, welches die Lichtquelle (21) aufnimmt und einen Reflektor (27) aufweist, wobei der Reflektor (27) dazu konfiguriert ist, von der Lichtquelle (21) ausgesandtes Licht in einen Arbeitsbereich (A) der Einbaubohle (5) zu reflektieren, so dass der Arbeitsbereich (A) der Einbaubohle (5) indirekt beleuchtet wird.

2. Straßenfertiger nach Anspruch 1, wobei der Reflektor (27) dazu konfiguriert ist, zumindest 50 % oder zumindest 60 % oder zumindest 70 % oder zumindest 80 % oder zumindest 90 % oder zumindest 95 % der von der Lichtquelle (21) emittierten Lichtleistung zu reflektieren.

3. Straßenfertiger nach Anspruch 1 oder 2, wobei der Reflektor (27) eine gekrümmte Reflexionsfläche (29) zum Reflektieren des von der Lichtquelle (21) ausgesandten Lichts in den Arbeitsbereich (A) der Einbaubohle (5) umfasst.

4. Straßenfertiger nach einem der vorangehenden Ansprüche, wobei der Reflektor (27) zumindest bereichsweise oberhalb der Lichtquelle (21) vorgesehen ist.

5. Straßenfertiger nach einem der vorangehenden Ansprüche, wobei eine Hauptabstrahlrichtung der Lichtquelle (21) gegenüber einer horizontalen Richtung nach oben geneigt ist.

6. Straßenfertiger nach einem der vorangehenden Ansprüche, wobei die Lichtquelle (21) entlang einer horizontalen Blickrichtung durch das Gehäuse (19) verdeckt ist.

7. Straßenfertiger nach einem der vorangehenden Ansprüche, wobei der Reflektor (27) von oben bis zumindest auf das Level einer Unterkante der Lichtquelle (21) heruntergeführt ist.

8. Straßenfertiger nach einem der vorangehenden Ansprüche, wobei die Lichtquelle (21) eine Mehrzahl vom LEDs (23) umfasst, welche vorzugsweise separat voneinander schaltbare LEDs (23) umfasst.

9. Straßenfertiger nach einem der vorangehenden Ansprüche, wobei die Lichtquelle (21) dimmbar ist.

10. Straßenfertiger nach einem der vorangehenden Ansprüche, wobei der Reflektor (27) dazu konfiguriert ist, das von der Lichtquelle (21) ausgesandte Licht unter einem Winkel von wenigstens 30° oder wenigstens 35° oder wenigstens 40° oder wenigstens 45° oder wenigstens 60° gegenüber einer horizontalen Ebene in den Arbeitsbereich (A) der Einbaubohle (5) zu reflektieren.

11. Straßenfertiger nach einem der vorangehenden Ansprüche, wobei der Reflektor (27) dazu konfiguriert ist, von der Lichtquelle (21) ausgesandtes Licht in einen Bodenbereich zu strahlen, welcher sich bezüglich der Einbaufahrtrichtung (F) des Straßenfertigers (1) maximal 5 m oder maximal 6 m oder maximal 8 m oder maximal 10 m oder maximal 15 m hinter der Beleuchtungseinheit (17) erstreckt.

12. Straßenfertiger nach einem der vorangehenden Ansprüche, wobei die Beleuchtungseinheit (17) eine Streueinrichtung (37) umfasst, welche in einem Strahlengang des von der Lichtquelle (21) ausgesandten Lichts angeordnet ist.

13. Straßenfertiger nach Anspruch 12, wobei die Streueinrichtung (37) ein Prisma und/oder eine Streuscheibe umfasst.

14. Straßenfertiger nach einem der vorangehenden Ansprüche, wobei die Beleuchtungseinheit (17) dazu konfiguriert ist, wahlweise eine Arbeitsbeleuchtung zum Beleuchten des Arbeitsbereichs (A) der Einbaubohle (5) bereitzustellen oder eine Notbeleuchtung mit gegenüber der Arbeitsbeleuchtung reduzierter Lichtleistung bereitzustellen.

15. Straßenfertiger nach einem der vorangehenden Ansprüche, wobei die Beleuchtungseinheit (17) als ein Modul an dem Dach (15) des Hauptbedienstands (11) angebracht ist.

## Claims

1. Road finishing machine (1) with a tractor (3) and with a screed (5) hinged to the tractor (3) to be towed behind the tractor (3), wherein
a main control platform (11) of the road finishing machine (1) is provided at the tractor (3), the main control platform (11) offering space for an operator and comprising operational controls (13) for controlling functions of the road finishing machine (1); and
the main control platform (11) has a roof (15), wherein a lighting unit (17) with a light source (21) is provided at the roof (15),
**characterized in that**
the lighting unit (17) comprises a housing (19) which accommodates the light source (21) and has a reflector (27), wherein the reflector (27) is configured to reflect light emitted by the light source (21) into a working area (A) of the screed (5), so that the working area (A) of the screed (5) is illuminated indirectly.

2. Road finishing machine according to claim 1, wherein the reflector is configured to reflect at least 50 %, or at least 60 %, or at least 70 %, or at least 80 %, or at least 90 %, or at least 95 % of the light output emitted by the light source (21).

3. Road finishing machine according to claim 1 or 2, wherein the reflector (27) comprises a curved reflection face (29) for reflecting the light emitted by the light source (21) into the working area (A) of the screed (5).

4. Road finishing machine according to any one of the preceding claims, wherein the reflector (27) is provided above the light source (21) at least in some areas.

5. Road finishing machine according to any one of the preceding claims, wherein a main radiation direction of the light source (21) is upwardly inclined with respect to a horizontal direction.

6. Road finishing machine according to any one of the preceding claims, wherein the light source (21) is covered by the housing (19) along a horizontal viewing direction.

7. Road finishing machine according to any one of the preceding claims, wherein the reflector (27) extendes from upwards at least down to the level of a bottom edge of the light source (21).

8. Road finishing machine according to any one of the preceding claims, wherein the light source (21) comprises a plurality of LEDs (23) which preferably comprise LEDs (23) that are separately switchable.

9. Road finishing machine according to any one of the preceding claims, wherein the light source (21) is dimmable.

10. Road finishing machine according to any one of the preceding claims, wherein the reflector (27) is configured to reflect the light emitted by the light source (21) into the working area (A) of the screed (5) at an angle of at least 30°, or at least 35°, or at least 40°, or at least 45°, or at least 60° with respect to a horizontal plane.

11. Road finishing machine according to any one of the preceding claims, wherein the reflector (27) is configured to radiate light emitted by the light source (21) into a ground area which extends, with respect to the paving direction (F) of the road finishing machine (1), at most 5 m, or at most 6 m, or at most 8 m, or at most 10 m, or at most 15 m behind the lighting unit (17).

12. Road finishing machine according to any one of the preceding claims, wherein the lighting unit (17) comprises a diffusing assembly (37) which is arranged in a beam path of the light emitted by the light source (21).

13. Road finishing machine according to claim 12, wherein the diffusing assembly (37) comprises a prism and/or a diffusing screen.

14. Road finishing machine according to any one of the preceding claims, wherein the lighting unit (17) is configured to selectively provide a working lighting for illuminating the working area (A) of the screed (5) or an emergency lighting with reduced light output compared to the working lighting.

15. Road finishing machine according to any one of the preceding claims, wherein the lighting unit (17) is attached at the roof (15) of the main control platform (11) as a module.

## Revendications

1. Finisseur (1) avec un véhicule tracteur (3) et une poutre lisseuse (5) qui est articulée sur le véhicule tracteur (3) pour être tirée derrière le véhicule tracteur (3), dans lequel
un poste de commande principal (11) du finisseur (1) est pourvu sur le véhicule tracteur (3), offrant un espace pour un opérateur et comportant des éléments de commande (13) pour commander les fonctions du finisseur (1) ; et
le poste de commande principal (11) comporte un toit (15), dans lequel une unité d'éclairage (17) avec une source lumineuse (21) est pourvue sur le toit (15),
**caractérisé en ce que** l'unité d'éclairage (17) comprend un boîtier (19) qui reçoit la source lumineuse (21) et comporte un réflecteur (27), dans lequel le réflecteur (27) est configuré pour réfléchir la lumière émise par la source lumineuse (21) dans une zone de travail (A) de la poutre lisseuse (5), de telle sorte que la zone de travail (A) de la poutre lisseuse (5) soit éclairée indirectement.

2. Finisseur selon la revendication 1, dans lequel le réflecteur (27) est configuré pour réfléchir au moins 50 %, ou au moins 60 %, ou au moins 70 %, ou au moins 80 %, ou au moins 90 %, ou au moins 95 % de la puissance lumineuse émise par la source lumineuse (21).

3. Finisseur selon la revendication 1 ou 2, dans lequel le réflecteur (27) comporte une surface de réflexion incurvée (29) pour réfléchir la lumière émise par la source lumineuse (21) dans la zone de travail (A) de la poutre lisseuse (5).

4. Finisseur selon l'une des revendications précédentes, dans lequel le réflecteur (27) est pourvu au moins dans certaines zones au-dessus de la source lumineuse (21).

5. Finisseur selon l'une des revendications précédentes, dans lequel la direction d'émission principale de la source lumineuse (21) est inclinée vers le haut par rapport à la direction horizontale.

6. Finisseur selon l'une des revendications précédentes, dans lequel la source lumineuse (21) est recouverte par le boîtier (19) selon une direction d'observation horizontale.

7. Finisseur selon l'une des revendications précédentes, dans lequel le réflecteur (27) est dirigé vers le bas depuis le dessus au moins jusqu'au niveau d'un bord inférieur de la source lumineuse (21).

8. Finisseur selon l'une des revendications précédentes, dans lequel la source lumineuse (21) comprend une pluralité de DEL (23), qui comprennent de préférence des DEL (23) commutables séparément les unes des autres.

9. Finisseur selon l'une des revendications précédentes, dans lequel la source lumineuse (21) est modulable.

10. Finisseur selon l'une des revendications précédentes, dans lequel le réflecteur (27) est configuré pour réfléchir la lumière émise par la source lumineuse (21) selon un angle d'au moins 30°, ou d'au moins 35°, ou d'au moins 40°, ou d'au moins 45°, ou d'au moins 60° par rapport à un plan horizontal dans la zone de travail (A) de la poutre lisseuse (5) .

11. Finisseur selon l'une des revendications précédentes, dans lequel le réflecteur (27) est configuré pour rayonner la lumière émise par la source lumineuse (21) dans une zone au sol qui s'étend d'au plus 5 m, ou d'au plus 6 m, ou d'au plus 8 m, ou d'au plus 10 m, ou d'au plus 15 m derrière l'unité d'éclairage (17) par rapport à la direction d'avancement de pose (F) du finisseur (1).

12. Finisseur selon l'une des revendications précédentes, dans lequel l'unité d'éclairage (17) comprend un dispositif de diffusion (37) qui est agencé dans un chemin de faisceau de la lumière émise par la source lumineuse (21).

13. Finisseur selon la revendication 12, dans lequel le dispositif de diffusion (37) comporte un prisme et/ou un disque diffuseur.

14. Finisseur selon l'une des revendications précédentes, dans lequel l'unité d'éclairage (17) est configurée pour fournir sélectivement un éclairage de travail afin d'éclairer la zone de travail (A) de la poutre lisseuse (5) ou afin de fournir un éclairage de secours avec une puissance lumineuse réduite par rapport à l'éclairage de travail.

15. Finisseur selon l'une des revendications précédentes, dans lequel l'unité d'éclairage (17) est montée sous forme d'un module sur le toit (15) du poste de commande principal (11) .
